# EUROPEAN PATENT SPECIFICATION

(11) **EP 1 946 064 B1**
(45) Date of publication and mention of the grant of the patent: **18.05.2011**
(21) Application number: 06807718.9
(22) Date of filing: 02.11.2006
(51) Int. Cl.: G01L 19/12, H01H 35/26

(54) **PROGRAMMABLE ELECTRONIC PRESSURE SWITCH WITH DISPLAY**
PROGRAMMIERBARER ELEKTRONISCHER STROMSCHALTER MIT DISPLAY
PRESSOSTAT ELECTRONIQUE PROGRAMMABLE A ECRAN

(30) Priority: 08.11.2005 IT MI20052122
(43) Date of publication of application: 23.07.2008
(73) Proprietor: Elettrotec s.r.l., I-20125 Milano (IT)
(72) Inventor: SARTOR, Adriana, I-20129 Milano (IT)
(74) Representative: Mittler, Enrico
(86) International application number: PCT/EP2006/068040
(87) International publication number: WO 2007/054460

(56) References cited:
- US-A- 5 361 218
- US-A- 5 982 047
- US-A1- 2004 187 585
- US-B1- 6 429 548

## Description

The present invention concerns a programmable electronic pressure switch with display.

There are known pressure switches comprising an external body with an internal cavity in which a circuit board is accommodated which is connected to a pressure sensor and to a power supply via a connector.

Said pressure switches also comprise buttons for setting some parameters which are preferably arranged within the cavity for better projection.

Italian patent application MI2004A002329, filed on December 3rd, 2004, shows a pressure switch with two internal setting buttons which allow to set the intervention value and the reset value, present at digital outputs, according to the pressure status of the system to which said pressure switch is connected.

There are also pressure switches which comprise for a display with setting buttons which allow navigating in configuration menus managed by a software integrated in the circuit board comprised in the pressure switch.

Furthermore, said pressure switches may have analogue outputs thus defined: a low output (e.g. 4 mA) equivalent to no pressure, and a high output (e.g. 20 mA) equivalent to the maximum pressure with standable by the system (full-scale of the pressure gauge). An intermediate output proportional to the detected pressure is available for intermediate values.

Said analogue output signals may be used for measurement instruments, valve control and so on.

US 2004/187585 discloses an electronic digital pressure switch for detecting gas pressures features improved safety. The digital pressure switch that detects gas pressures and generates outputs has a housing provided with pinholes that allow a gas to pass therethrough. With this arrangement, even if a gas should leak into the housing, the leakage gas is let out through the pinholes. Thus, when the pressure of a flammable gas is detected, it is possible to eliminate the danger of an explosion caused by the flammable gas accumulating in the housing.

US 5982047 discloses a pressure switching device of the type used in motor vehicles and includes a pressure sensor 21 arranged in a housing 3, which generates an electrical signal U according to the pressure p of a pressure medium or monitored fluid transmitted through a supply opening 15 of housing 3. The pressure switching devices includes an interpretation and switching unit 55 adapted to received the electrical sensor signal U and is further adapted to compare the sensor signal with at least one switching threshold value to trigger a switching function or a sequence of switching functions upon the electrical sensor signal exceeding and/or falling short of the switching threshold value.

US 6429548 discloses a pressure switch with a pressure connection (11), with an electrical pressure sensor (19) to generate a pressure-dependent electrical signal, with an operator-device and/or an adjusting device (16-18) to input at least one pressure switch threshold and with at least one electrical switch output (16-18). The pressure switch can be adjusted by operation of the operator device (16-18) in such a manner that the electrical signal corresponding to the instantaneously applied pressure (p) is saved as the first saved pressure value (S1) and the electrical signal corresponding to a pressure (p) applied temporally thereafter, is saved as a second saved pressure value (S2), where these two saved pressure values (S1, S2) define the pressure switching threshold(s) in the operating mode.

It is the object of the present invention to make a pressure detecting pressure switch which can be programmed so as to vary the output levels corresponding to the detected pressures, in particular allowing to vary the pressure which determines the high level analogue output.

According to invention, this object is reached by an electronic pressure switch as defined in claim 1.

The possibility of setting the high level analogue output as desired according to the pressure allows to control valves, to provide signals to measurement instruments and more. In essence, the pressure switch according to the present invention may interface with any machine without the interposition of signal transformation devices.

These and other features of the present invention will be further explained in the following detailed description of an embodiment thereof shown by way of non-limitative example in the attached drawings, in which:
figure 1 shows a frontal view of a pressure switch according to the present invention;
figure 2 shows a sectional view taken along line II-II in figure 1;
figure 3 shows a sectional view taken along line III-III in figure 2;
figure 4 shows a circuit comprised in said at least one circuit board.

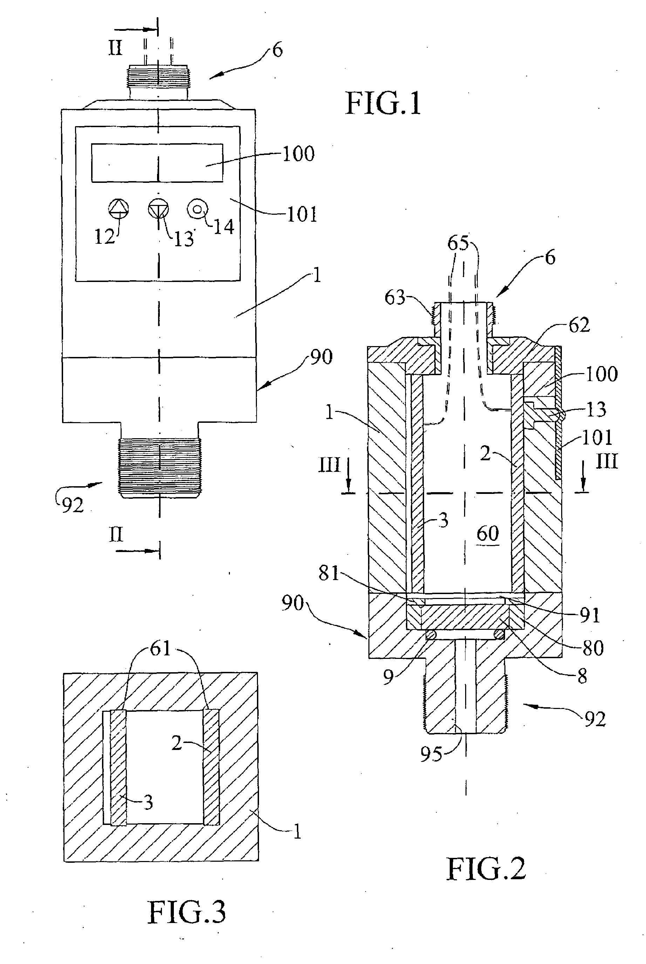

The electronic pressure switch shown in figures 1 and 2 comprises an external aluminium body 1 with a cavity 60 having two pairs of longitudinal grooves 61 removably engageable with the ends of flat extractable circuit boards 2-3, electrically connected to each other.

Said cavity 60 is upperly closed by a lid (62) which supports a connector 6 with external threading 63, crossed by electrical wires 65 for the external electrical connection of circuit boards 2-3.

External board 1 supports a LED display 100 and setting buttons 12-14, said display and said buttons being protected by a membrane 101.

On the lower part of body 1 a steel flange 90 is fixed which is provided with a cavity 91 in which a ceramic pad pressure sensor 8 with respective seal 9 is fixed by means of a ring nut 80 and a spacer 81, underneath which cavity a threaded attachment 92 for connecting to the pressurised circuit to be monitored, with an internal input channel 95 for the monitored fluid, is found.

Said flange 90 is releasable from body 1, and in general is made of more resistant material with respect to body 1 in order to work at very high working pressures. It may also be replaced by another flange of different material variable according to the required working pressure.

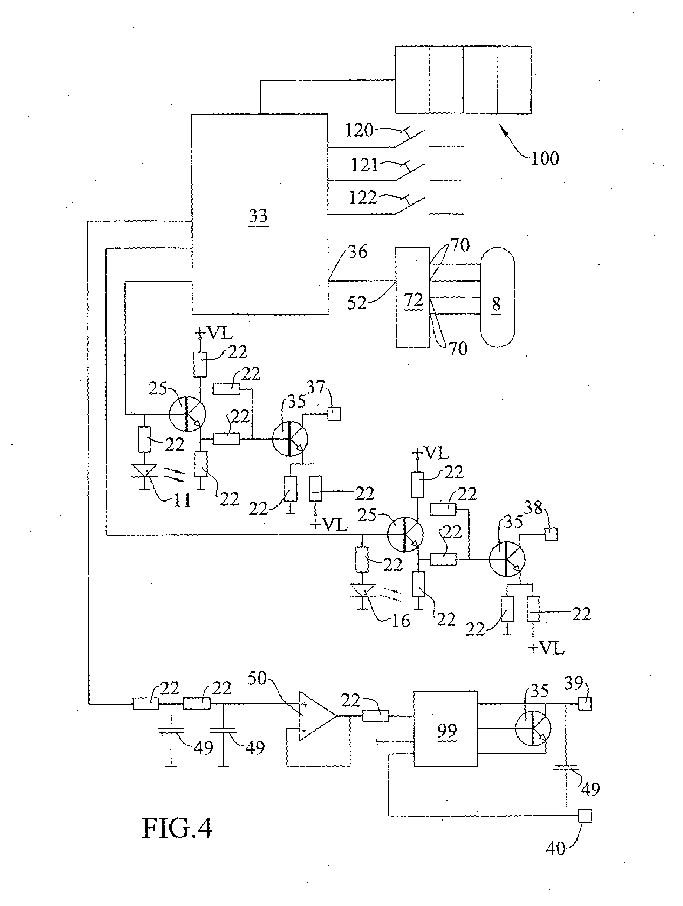

From a circuit point of view, said boards 2-3 comprise as a whole a circuit of the type shown in figure 4 having switches 120-122 respectively controlled by setting buttons 12-14, a microprocessor 33 with internal E2PROM, switching transistors 25, power transistors 35, various resistors 22, capacitors 49, an amplifier 50, ground connections, analogue outputs 39-40 controlled by a further regulation board 99, and digital outputs 37-38 with indicator LEDs 11 and 16.

The circuit further comprises a Wheatstone bridge 72 to which the ceramic pad 8 is connected, with inputs 70 and an output 52 connected to an input 36 of microprocessor 33.

Figure 4 further shows a LED display 100 connected to microprocessor 33.

The management of information contained in the pressure switch and the manual setting are rather simple operations being based on the use of buttons 12-14 and on visualisation by means of display 100.

It is assumed that the pressure switch is fitted in the monitored system or machine with intervention pressure (e.g. 7 bars) taken to the required running value. Such pressure is detected by ceramic sensor 8, which determines an umbalance of Wheatstone bridge 72 which is translated into an electrical signal of amplitude corresponding to the detected pressure, existing on output 52 of Wheatstone bridge 72 and on input 36 of microprocessor 33 of circuit 17 in fig. 3.

Said detected pressure may be shown on display 100.

By navigating by means of setting buttons 12-14 in configuration menu managed by a software integrated in boards 2-3 and visible by means of display 100, it is possible to program:
- the intervention values;
- the engineering unit;
- the delay time of outputs 37-40;
- the intervention point;
- the reset point with or without pressure.

In particular, buttons 12-13 are used to scroll the menus up and down, button 14 is used to access the submenus and more in general to provide input signals. The navigation system is similar to that of a cellular telephone. The menus are essentially "tree"-structured: the buttons are used to reach the required "branch".

It is not necessary to stop the monitored pressurised system or machine to perform these settings. The presence of power in the pressure switch is indicated on display 100.

Each acquisition of a new intervention value also automatically sets the reset threshold (hysteresis) according to a minimum hysteresis value.

As previously mentioned, the pressure switch presents digital outputs 37-38 and analogue current outputs 39-40 (which may also be voltage outputs).

Of the various settings, the basic, and possibly the most useful, setting allows to set output signals according to the detected pressure. Usually, a first output is associated to zero pressure (no pressure) value and a second output is associated to maximum pressure (full-scale of the pressure gauge) value.

For example, by setting a digital output 37-38, display 100 will light up with red light (red LED 11) if the output is "1" (zero pressure) and green light if the output is "0" (full-scale). Obviously, the signals may be reversed.

If an analogue output is set, a low current output 40 can be set (e.g. 4 mA) in the event of no pressure and a high output 39 (e.g. 20mA) can be set for the full-scale.

An essential innovation made possible by the presence of display 100 and buttons 12-14, as well as by the management software used, consists in the possibility of setting at all times the pressure value other than zero which determines the presence of the high voltage value on analogue output. This means that a high signal (20 mA) can be obtained also for low pressure values, said high signal being very important for the operation of various measurement instruments or for controlling valves or other instruments.

As already pointed out in the preamble to the present patent, the current pressure switches allow to associate the high value (20 mA) to the full-scale, the intermediate pressures being indicated by signals proportionally lower and not suitable for the purpose for which they are used.

Board 99 of the circuit in figure 4 indeed allows to set high output 39 to different pressure values.

The pressure switch here described may be provided with means for allowing remote information display and programming. In complex systems in which several pressure switches are fitted, the pressure switch can be identified from a remote control position and its operation.

Setting buttons 12-14 may be used to introduce programming lock/unlock codes. The operator can perform setting operations only if the programmed combination of buttons 12-13 is known (e.g. button 12 is pressed twice, button 13 is pressed once and then button 14 is pressed three times). Such code is managed by a software integrated in circuit boards 2-3.

The pressure switch according to the present invention thus allows to work in total safety (it has a high resistance to pressure surges and overpressure) and to rapidly set various parameters easily visible by means of display 100.

## Claims

1. An electronic pressure switch comprising an external body (1) provided with a cavity (60) wherein there are accommodated a pressure sensor (8) arranged under the pressure of the monitored environment and adapted to detect pressure values comprises between a minimum pressure value and a maximum pressure value, at least one circuit board (2-3) provided with memory connected to said pressure sensor (8) and a display (100) for viewing information for the operator and programming the pressure switch itself by means of setting means comprising at least one button (12-14), said at least one circuit board (2-3) comprising circuit components (22, 25, 35, 49, 50) controlled by an integrated software, **characterised in that** said integrated software is adapted to set at least a first and a second analogue output values (39-40) with the second analogue output value (39) higher than the first analogue output value (40) and wherein the first analogue output value is set according to zero pressure value, the second analogue output value is set according to any pressure value measurable by the pressure sensor (8), comprised between zero and the maximum pressure values except the same zero pressure value, and **in that** said cavity (60) being upperly closed by a lid (62) which supports a connector (6).

2. A pressure switch according to claim 1, **characterised in that** it further comprises a digital output (37-38) adapted to provide a digital signal when a programmed pressure value is reached.

3. A pressure switch according to claim 1 or 2, **characterised in that** said circuit components comprise a regulation board (99), settable by means of said setting means (12-14), adapted to receive a signal from a microprocessor (33) and emit a digital output signal (37-38) and an analogue output signal (39-40) according to the received signal.

4. A pressure switch according to claim 3, **characterised in that** said microprocessor (33) is controlled by said setting means and is provided with a memory for storing a signal from a Wheatstone bridge (72) according to the pressure detected by sensor (8), said microprocessor adapted to determine the presence or not of an output signal (37-40) as a function of said signal stored in the memory, the output signal being the digital and/or the analogue output signal.

5. A pressure switch according to claim 1, **characterised in that** said at least one circuit board (2-3) comprises a software for displaying menus for reading information and configuring the pressure switch on the display (100), said menus being navigable with said at least one button (12-14).

6. A pressure switch according to claim 5, **characterised in that** it comprises a first (12) and a second (13) buttons for scrolling said menu and a third setting button (14).

7. A pressure switch according to any of the preceding claims, **characterised in that** it is adapted to allow the operator to set the pressure value for which a high analogue output signal is provided (39).

8. A pressure switch according to claim 1, **characterised in that** said display (100) is a LED display.

9. A pressure switch according to claim 1, **characterised in that** it comprises an external membrane (101) for protecting the display (100) and at least one button (12-14).

10. A pressure switch according to claim 1, **characterised in that** it comprises two circuit boards (2-3).

11. A pressure switch according to claim 1, **characterised in that** it comprises a removable lower flange (90) for attaching to the pressurised environment to be monitored.

## Patentansprüche

1. Elektronischer Stromschalter mit einem Außengehäuse (1) mit einer Aussparung (60), in der ein Drucksensor (8) unter dem Druck der überwachten Umgebung steht und geeignet ist, um Druckwerte zwischen einem minimalen Druckwert und einem maximalen Druckwert zu detektieren, wenigstens eine Platine (2-3) mit einem Speicher, der mit dem Drucksensor (8) und einem Display (100) zum Betrachten von Information durch den Betreiber und zum Programmieren des Stromschalter selbst mittels eines Stellmittels mit wenigstens einem Knopf (12-14) verbunden ist, wobei die wenigstens eine Platine (2-3) Schaltkreiskomponenten (22, 25, 35, 49, 50) umfasst, die von einer integrierten Software gesteuert werden,
**dadurch gekennzeichnet,**
**dass** die integrierte Software daran angepasst ist, wenigstens einen ersten und zweiten analogen Ausgangswert (39-40) zu setzen, wobei der zweite analoge Ausgangswert (39) höher ist als der erste analoge Ausgangswert (40) und der erste analoge Ausgangswert zu einem Druckwert gleich null gesetzt wird und der zweite analoge Druckwert zu einem von dem Drucksensor (8) messbaren Druckwert gesetzt wird zwischen dem Null- und den maximalen Druckwerten außer dem Nullwert, und
**dass** die Aussparung (60) oben durch einen Deckel (62) geschlossen ist, der einen Anschluss (6) trägt.

2. Stromschalter nach Anspruch 1, **dadurch gekennzeichnet, dass** er weiterhin einen digitalen Ausgang (37-38) umfasst, der daran angepasst ist, um ein digitales Signal zu liefern, wenn ein programmierter Druckwert erreicht ist.

3. Stromschalter nach Anspruch 1 oder 2, **dadurch gekennzeichnet, dass** die Schaltkreiskomponenten eine Regelplatine (99) umfassen, die mittels der Setzmittel (12-14) setzbar ist, die angepasst ist, um ein Signal von einem Mikroprozessor (33) zu erhalten und ein digitales Ausgangssignal (37-38) und ein analoges Ausgangssignal (39-40) entsprechend dem empfangenen Signal abzugeben.

4. Stromschalter nach Anspruch 3, **dadurch gekennzeichnet, dass** der Mikroprozessor (33) durch die Setzmittel gesteuert wird und mit einem Speicher zum Speichern eines Signals von einer Wheatstonebrücke (72) entsprechend dem vom Sensor (8) detektierten Druck ausgestattet ist, wobei der Mikroprozessor daran angepasst ist, um die An- oder Abwesenheit eines Ausgangsignals (37-40) als Funktion des im Speicher abgelegten Signals zu bestimmen, wobei das Ausgangssignal das digitale und/oder das analoge Ausgangssignal ist.

5. Stromschalter nach Anspruch 1, **dadurch gekennzeichnet, dass** die wenigstens eine Platine (2-3) eine Software umfasst zur Anzeige von Menüs zum Lesen von Information und zum Konfigurieren des Druckschalters auf dem Display (100), wobei die Menüs mittels des wenigstens einen Knopfes (12-14) navigierbar sind.

6. Stromschalter nach Anspruch 5, **dadurch gekennzeichnet, dass** er zudem einen ersten (12) und eine zweiten (13) Knopf zum Scrollen durch das Menü und einen dritten Setzknopf (14) umfasst.

7. Stromschalter nach einem der vorhergehenden Ansprüche **dadurch gekennzeichnet, dass** er angepasst ist, um es dem Betreiber zu ermöglichen, den Druckwert, für den ein hohes analoges Ausgangssignal ausgegeben wird (39), einzustellen.

8. Stromschalter nach Anspruch 1, **dadurch gekennzeichnet, dass** das Display (100) ein LED-Display ist.

9. Stromschalter nach Anspruch 1, **dadurch gekennzeichnet, dass** er eine externe Membran (101) zum Schutz des Displays (100) und des wenigstens einen Knopfes (12-14) umfasst.

10. Stromschalter nach Anspruch 1, **dadurch gekennzeichnet, dass** er zwei Platinen (2-3) umfasst.

11. Stromschalter nach Anspruch 1, **dadurch gekennzeichnet, dass** er einen entfernbaren unteren Flansch (90) zum Anbringen an die zu beobachtende, unter Druck stehende Umgebung aufweist.

## Revendications

1. Pressostat électronique comprenant un corps externe (1) pourvu d'une cavité (60) dans laquelle sont logés un capteur de pression (8) agencé sous la pression de l'environnement surveillé et conçu pour détecter des valeurs de pression comprises entre une valeur de pression minimum et une valeur de pression maximum, au moins une carte de circuit (2-3) pourvue d'une mémoire connectée audit capteur de pression (8) et un afficheur (100) pour présenter des informations à l'opérateur et pour programmer le pressostat lui-même à l'aide de moyens de réglage comprenant au moins un bouton (12 à 14), ladite au moins une carte de circuit (2-3) comprenant des composants de circuit (22, 25, 35, 49, 50) commandés par un logiciel intégré, **caractérisé en ce que** ledit logiciel intégré est conçu pour fixer au moins une première et une deuxième valeur de sortie analogique (39-40), la deuxième valeur de sortie analogique (39) étant supérieure à la première valeur de sortie analogique (40), et dans lequel la première valeur de sortie analogique est fixée conformément à une valeur de pression nulle, et la deuxième valeur de sortie analogique est fixée conformément à n'importe quelle valeur de pression mesurable par le capteur de pression (8), comprise entre les valeurs de pression nulle et maximum à l'exception de la susdite valeur de pression nulle, et **en ce que** ladite cavité (60) est fermée au niveau de sa partie supérieure par un couvercle (62) qui supporte un connecteur (6).

2. Pressostat selon la revendication 1, **caractérisé en ce qu'**il comprend en outre une sortie numérique (37-38) conçue pour fournir un signal numérique lorsqu'une valeur de pression programmée est atteinte.

3. Pressostat selon la revendication 1 ou 2, **caractérisé en ce que** lesdits composants de circuit comprennent une carte de régulation (99), pouvant être réglée à l'aide desdits moyens de réglage (12 à 14), conçue pour recevoir un signal d'un micro-processeur (33) et émettre un signal de sortie numérique (37-38) et un signal de sortie analogique (39-40) conformément au signal reçu.

4. Pressostat selon la revendication 3, **caractérisé en ce que** ledit micro-processeur (33) est commandé par lesdits moyens de réglage et est pourvu d'une mémoire pour mémoriser un signal provenant d'un pont de Wheatstone (72) conformément à la pression détectée par le capteur (8), ledit microprocesseur étant conçu pour déterminer la présence ou non d'un signal de sortie (37 à 40) en fonction dudit signal mémorisé dans la mémoire, le signal de sortie étant le signal de sortie numérique et/ou le signal de sortie analogique.

5. Pressostat selon la revendication 1, **caractérisé en ce que** ladite au moins une carte de circuit (2-3) comprend un logiciel pour afficher des menus pour lire des informations et pour configurer le pressostat sur l'afficheur (100), ledit au moins un bouton (12 à 14) permettant de naviguer dans lesdits menus.

6. Pressostat selon la revendication 5, **caractérisé en ce qu'**il comprend un premier (12) et un deuxième (13) bouton pour faire défiler ledit menu et un troisième bouton de réglage (14).

7. Pressostat selon l'une quelconque des revendications précédentes, **caractérisé en ce qu'**il est conçu pour permettre à l'opérateur de fixer la valeur de pression pour laquelle un signal de sortie analogique de niveau haut (39) est fourni.

8. Pressostat selon la revendication 1, **caractérisé en ce que** ledit afficheur (100) est un afficheur à DEL.

9. Pressostat selon la revendication 1, **caractérisé en ce qu'**il comprend une membrane externe (101) pour protéger l'afficheur (100) et au moins un bouton (12 à 14).

10. Pressostat selon la revendication 1, **caractérisé en ce qu'**il comprend deux cartes de circuit (2-3).

11. Pressostat selon la revendication 1, **caractérisé en ce qu'**il comprend une bride inférieure (90) amovible pour une fixation à l'environnement sous pression à surveiller.
